# EUROPEAN PATENT APPLICATION

(11) **EP 3 588 413 A1**
(43) Date of publication of application: **01.01.2020**
(21) Application number: 18425050.4
(22) Date of filing: 21.06.2018
(51) Int. Cl.: G06Q 20/32, H04W 12/06, G06F 21/36, H04L 29/06

(54) **IDENTIFICATION METHOD WITH STRONG AUTHENTICATION FOR THE ENABLING OF A COMPUTER SYSTEM**

(71) Applicant: Auriga S.p.A., 70022 Altamura (BA) (IT)
(72) Inventor: Fiore, Vincenzo, 70124 Bari (IT)
(74) Representative: Bruni, Giovanni

(57) **Abstract**

The present invention offers a solution to the problem of the "strong" authentication of a user who intends to access an IT platform to benefit from a generic service. The invention finds its main application (and this is the industrial context in which it was conceived) in the "strong" identification of the subjects wishing to make economic transactions on a generic IT platform, but it is certainly applicable with a wide generality and effectiveness in all contexts in which it is advisable to identify in a "strong" way an operator who accesses an IT platform for the most varied reasons.

In extreme synthesis, the present invention combines two existing systems (and therefore, in general, known systems) which are therefore modified with the addition of new functionalities so that they can be integrated in such a way as to cooperate. The taught integration provides that the identification process with "strong" authentication provided in the context of a known service, offered through a given computer system, can serve to "strongly" authenticate an operator who must be identified when accessing another generic service supported by a different computer system.

## Description

The present invention may be applied in all computer systems that support generic services which, to be used, require the identification of the operator requesting them.
The automated systems for cash transfers or, more in general, for financial transactions are a very typical example. In particular, the present invention discloses a solution for the identification, with strong authentication, of the user who needs to perform said financial transaction.
For example, typical transactions that can benefit from the teachings of the present invention are all the operations that occur on a bank account, from which an amount of money is deducted (withdrawn) and then destined for various purposes. Then, said deducted amount of money can be credited into another account to make a payment or a donation, or it can be paid in cash through an ATM terminal (in Italy, for example, the Bancomat service). Such economic transactions, in general, require that the subjects who make them are identified with certainty; in fact, any withdrawal of money from a current account can be made only by those who are authorized, and it is essential that such authorized person is identified with certainty to avoid fraud, or theft, of various kinds. In computer jargon, an "authentication" process is defined as "strong" when it is based on two elements of control. In general, the "strong" control of an identity is based on two prerogatives of the subject to be identified: something that he knows (typically a password or PIN), and something that he has with him, which acts as a physical key (or hardware key); typical physical keys can be a smart-card, a generic payment card, or physical "token" of various types such as those used for "Home banking" applications.
Let's image a cash withdrawal at an ATM terminal: it is clear that it is not enough to have the payment card (i.e. the physical key) if you do not know the PIN that allows it to be used; just as, it is not enough to know a PIN to make a withdrawal from a specific bank account. Only the person authorized to operate on a particular bank account, in fact, should have a specific payment card, and should know the associated PIN; in this way, this subject is identifiable in a strong way, that is with excellent reliability.

The issue of the "strong authentication" is becoming, more and more, as a topic of great relevance. This is not only due to the progressive spread of electronic payments, but it is also due to the fact that an increasing number of activities, today, can take place by inserting, retrieving or modifying information managed through IT platforms. Therefore, the authentication (possibly of the "strong" type) of a subject operating on a computer platform can be appropriate, if not indispensable, in many circumstances.
The most common procedure to carry out a strong authentication of an identity is to provide the subject who has to be identified with a hardware key and a PIN (which he must usually remember by heart), but it is clear that this cannot be a long-term road, to be adopted in a scenario in which such identification processes are requested more and more frequently, and for an ever-increasing number of different services.
Other "strong" authentication methods can be conceived based on sophisticated technologies that exploit the physiognomic analysis of the subject to be identified, but such solutions are still quite complex and, above all, require significant hardware adjustments in all interface systems: a slowness of diffusion.
So, it may be convenient to design a specific "strong" authentication service, which is general and can be associated with an indeterminate number of generic applications, in which an operator is called to identify himself on an IT platform.
For this reason, it is hereby specified that the main field of application of the present invention (and this is the industrial context in which it was conceived) is the "strong" identification for making economic transactions on an IT platform, but the taught solution is certainly applicable with broad generality and effectiveness in all contexts in which it is advisable to "strongly" identify an operator who accesses an IT platform for the most varied reasons.

As already noted above, on-line economic transactions are becoming increasingly widespread and, among the various technologies proposed by the known art, there are some that have interesting prerogatives, because they are very simple to use (i.e. they are characterized by an excellent usability): above all, these technologies foresee the identification, associated to a "strong" authentication, of the subjects that make them.
Among these, there is the solution taught in patent n. IT0001402448 entitled: "Method for making online payments through the use of a smartphone". Such solution taught in this patent is already commercially applied in a service and supports payments between two subjects registered on an IT platform responsible for managing this service. From now on, the term "direct transaction service" will be used, having in mind the real service referred to above; however, this term will be understood to refer to all the generic services that are characterized by the features highlighted below.
Said "direct transaction service", therefore, provides that a paying party can transfer a certain amount of money from its own bank account to the bank account of a beneficiary party.
The operation of said "direct transaction service" is very simple, and it is summarized below by points.
✔ The beneficiary party submits an identification label to the paying party (in the case actually implemented, this label is a QR code).
✔ The paying party acquires this label, and from this he obtains some information necessary to indicate the destination of the payment and to authorize it.
✔ It is essential that said acquisition of said label identifying the beneficiary party is acquired through an appropriately customized application (e.g. installed on "smartphones" equipped with a video camera for the acquisition of the label); in this way the combination of this application and the hardware on which it is installed, becomes the entity that constitutes the physical key (i.e. the "what someone must have") necessary for a "strong" authentication.
✔ By means of said customized application, which must be executed by the hardware on which it has been appropriately installed previously, the paying party can issue, via internet towards a predefined server (associated with said "direct transaction service"), the commands necessary to perform an economic transaction by crediting an amount of money from his bank account to the account of the beneficiary.
✔ The "strong" authentication of the paying party takes place because the latter is also called to enter a password (or PIN) to arrange the transaction. In this way, the paying subject is identified in a "strong" way because, not only he must be in possession of the specific terminal equipped with the specific customized application, but he must also know the dispositive password.

It is noted that the "direct transaction service", which is summarized above, is particularly simple to use. It just requires that both the involved parties carry out transactions between them after registering for said "direct transaction service"; the only other condition (obvious, but worth remembering) is that both the subjects involved in this "direct transaction" are connected to the Internet.
The transaction then, from an operational point of view, is very simple. In a typical example, the beneficiary exhibits the label (which can be fixed or generated case-by-case), the payer acquires the label by photographing it, using a special application installed on his "smartphone", and this label is sent (integrally or an extract of the information contained in it) to the server that manages the service upon confirmation of the paying party, who enters his password or PIN and, eventually, the amount to be paid, in case the information is not already contained in the label (i.e. in the cases in which the label is fixed and not generated for each individual transaction).
The "direct transaction service" described above is particularly efficient also because, in its preferred implementations, it is based on user terminals which are the so-called "smartphones", i.e. terminals registered on a cellular mobile telecommunication network. These terminals are designed to be truly personal terminals, uniquely identifiable, and robust against cloning attempts: they are therefore particularly suitable for setting up a hardware key in the context of an identification process, with strong authentication. Not only that, the fact that they are by their nature connected to a network that offers access to the Internet, eliminates any problem related to interfacing with the hardware key, to verify the possession of it by the subject that must be identified.
It has already been said that there is already at least one commercial implementation of such a "direct transaction service" and that, in this implementation, the label consists of a QR code that can be fixed (for example a real adhesive label) or generated on screen, and therefore able to contain also variable data associated with the specific transaction. The use of QR code (or even barcodes) has the advantage that the reader is a camera, and that each mobile terminal, now, integrates a camera suitable for easily acquiring a QR code. It is however evident that such "direct transaction services" only require that the paying subject acquires a label, and therefore in the future, labels based on short-range radio technologies (e.g. NFC - Near Field Communication) that are already mature can also be used for applications of this type, in fact, their integration in future generation mobile terminals is already foreseeable. Or, you can resort to other technologies that are not yet sufficiently mature (e.g. technologies based on acquisitions of physiognomic characteristics), but which can potentially allow a beneficiary to be identified by a paying subject.

To conclude the brief description of this "direct transaction service" (which, it should be remembered again, is a well-known service), we can see how this can also be applied to other transactions, which can be seen as a direct transaction, such as cash withdrawals at ATM terminals.
In fact, just assimilate a given ATM to a beneficiary, and the subject who wants to make the withdrawal, to a paying subject. In this case, said subject that wants to make the withdrawal can in some way select the picking function on the ATM terminal through said direct transaction service, the ATM terminal will exhibit a special label that the subject wishing to make the withdrawal will acquire and send to the server as in the case of a real payment, confirming the sending by entering a password or a PIN, together with the amount that it intends to withdraw. This provision will ensure that the amount of money in question is deducted from the bank account of the subject who wants to make the withdrawal (which behaves like a real paying subject) and is assigned to an account associated with the ATM terminal (which then behaves as a beneficiary subject), which can therefore dispense the cash corresponding to the amount just "received".
The newly synthesized "direct transaction service" is cited as it represents an interesting banking service based on a "strong" authentication of the person who arranges the operation. And this service may be subject to an important evolution that will be the object of the present invention, and which will allow to offer a very efficient solution to the problem of "strong" authentication of a person who must be identified on a generic IT platform.
Another reason why said "direct transaction service" is mentioned, consists in the fact that it bases its operation on a mechanism which envisages a personalized customer application that operates in connection with a serving application installed on a remote server. And this mechanism indicates a procedure suitable for the reliable management of all the information that a network server needs in order to place operations of considerable importance, such as economic transactions.
In particular, said network server has the banking information of all its users, as they are previously registered, and this allows the technical performing of the transfers, or other forms of transaction. It also knows the identities of the payer and the beneficiary, and the amount to be transferred, as it receives this information in a reliable way, since this information is transmitted in an efficient and secure manner by the subject who must authorize the transaction, which in turn, is "strongly" identified.

After this introduction, the importance of the fundamental scope of the present invention is then understandable, which is the scope of conceiving a system, and the associated procedure, which can guarantee the "strong" authentication of the identity of a subject who must access a plurality of IT platforms. And this must happen without the necessity of activating a new physical key (hardware) and a new password or PIN every time.
A further object of the present invention is to conceive a system, and the associated procedure, so that said "strong" authentication does not require the diffusion of specific hardware to verify the possession of the physical key.
Again, a further object of the present invention is to conceive a system, and the associated procedure, so that the "strong" authentication occurs by a procedure characterized by excellent usability (that is, with ease of use).
Finally, a further object of the present invention is to conceive a system, and the associated method, which can be easily integrated with other procedures. Those are the procedures associated with the other generic services that the subject to be identified intends to enjoy when he accesses the various IT platforms (on which, in fact, he must be identified).

The aims set for this invention are achieved by using a combined computer system resulting from the functional integration of two computer systems: wherein "functional integration" means that these two systems remain physically distinct and autonomous, but they are appropriately modified so that they cooperate to perform some functions. A first computer system supports a generic service in which at least one operator accesses said second computer system, in order to use said generic service, upon identification, and a second computer system supports a "direct transaction service".
Said operator must also be registered to use said "direct transaction service" supported by said second computer system, and he must be provided with a personal mobile radio terminal equipped with a label acquisition subsystem, and said personal mobile radio terminal is connected to said second computer system through a telecommunications network, and on said mobile radio terminal an application, suitable to support said "direct transaction service", is installed, and said application is able to manage the acquisition of a label that allows said application to transmit to a remote server, comprised in said second computer system, the information necessary for the use of said "direct transaction service", so that the identification of said operator by said second computer system is authenticated in a "strong" way.

Said combined computer system is characterized in that:
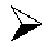 said first computer system, which supports said generic service, also supports an association function, which associates said generic service with said "direct transaction service";
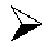 said association function provides that said operator, which must access said first computer system to use said generic service upon identification, configures his access rights so that the access is authorized by at least one command coming from said second computer system;
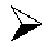 said association function provides that said second computer system has the information that said operator has configured its access rights in such a way that the access to said generic service is granted, or not, depending from an appropriate command coming from said second computer system;
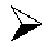 said first computer system, which supports a generic service, also provides an identification function that is executed each time that said operator requests access to said generic service, but after said association has been previously completed, and said identification function provides that a label identifying said access request is presented to said operator, and said label (or at least part of the information contained therein) is made known to said second computer system which supports said "direct transaction service";
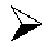 said operator acquires said label and transmits information drawn from it to said second computer system according to the same procedure that he performs to make use of said "direct transaction service" for which he is registered;
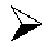 said second computer system is configured in such a way that, upon receiving said information taken from said label, having all the information to identify said operator, establishes whether or not he is enabled to access said generic service supported by said first computer system;
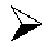 if said operator is enabled to access said generic service, said second computer system transmits an authorization command to said first computer system, and the access request of said operator is successful so that he can continue the use of this generic service.

The main advantage of the present invention is that a combined system, realized according to the teachings of the present invention, satisfies the main purposes for which it was conceived. This invention also has further advantages, which will be made more evident by the following description, the attached claims which form an integral part of the description and by the illustration of some practical embodiments described, by way of non-limiting example, in the following and in the attached drawings in which:
Figure 1 shows a synthetic scheme of the combined system according to the present invention.
Figure 2a shows an example of an association protocol, according to the teachings of the present invention, between a generic service supported by a first computer system and a "direct transaction service" supported by a second computer system.
Figure 2b shows an example of an identification protocol, with "strong" authentication, which can be performed after a generic service, supported by said first computer system, has been combined with said "direct transaction service"; the represented protocol allows to identify, with "strong" authentication, and according to the teachings of the present invention, an operator that accesses a generic service supported by said first computer platform.

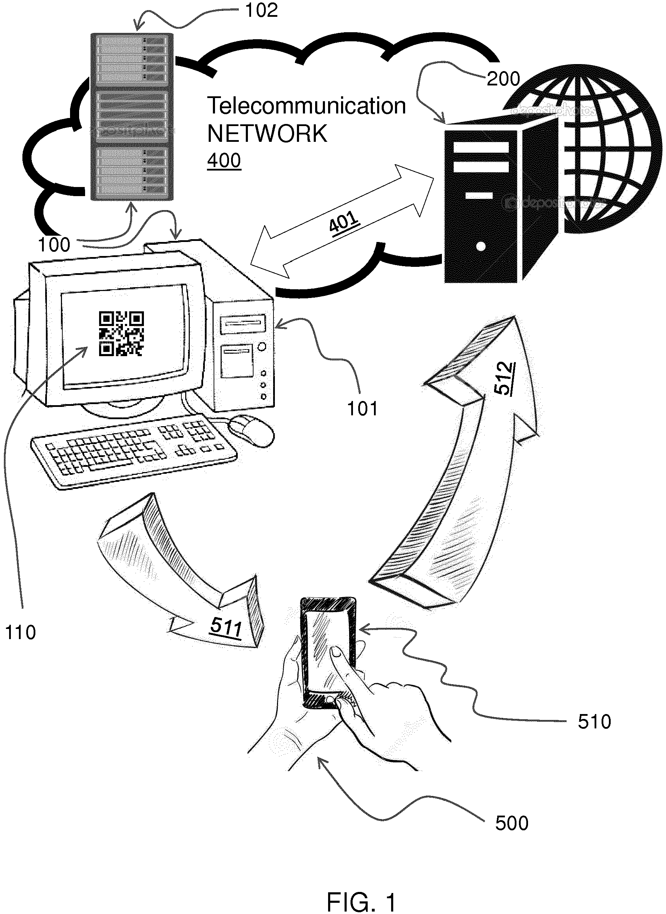

In Figure 1, the number 200 indicates a second computer system suitable to support an online service. Said second computer system 200 is a known system, and it is typically configured to provide "direct transaction services", i.e. services with the characteristics summarized in the first part of the present description, which outlines the relevant prior art for the present invention.
Said second computer system, therefore, provides said "direct transaction service" only to users previously registered, including a user indicated in Figure 1 with the number 500, who has to be provided with a personal telecommunications terminal, indicated in Figure 1 with the number 510. Then said user 500 is registered on said second computer system 200, that means that he interacts with said second computer system 200 through (usually exclusively) its terminal 510 on which a customizable application is installed. Therefore, when said user 500 communicates with said second computer system, he is identified, since both the terminal (or at least its address / SIM) and the application are recognizable. Moreover, this identification can be easily authenticated in a "strong" way by providing that, in occasion of certain operations, performed by said user 500, he also inserts a password which confirms his identity. The identification of the user 500 operating in said first computer system 100 is therefore to be considered a "strong" authentication, as it must take place through a specific terminal on which a specific custom application is installed, this acts as a physical key, in addition, said user 500 must also enter a secret password, and this acts as a software key.
Another essential prerogative of said second computer system 200, and of said "direct transaction service", which is based on this system, lies in the fact that said personal terminal 510 (on which a custom application is installed) is able to acquire a labeling from a third party and to transmit information deduced also from said label, in a safe and reliable way, to said second computer system 200 (or, more simply, it retransmits the label as it is).
As already repeated several times, said second computer system 200 is a known system and, when it operates according to its usual way of operation, the acquisition of said label refers to a label that concerns a second user registered to use said "direct transaction service".
In the case of the present invention, instead, a different operating mode is provided, and therefore said second computer system 200 must undergo some modifications.
A first set of changes concerns the introduction of new functionalities to allow the association of said second computer system 200 with other computer systems for the provision of other generic online services.
In Figure 1, the number 100 indicates a first computer system that theoretically can offer any generic online service for which user authentication is required.
In Figure 1, the number 101 indicates a generic access point for said generic online service; the number 102 instead indicates a generic network server that supports the provision of said generic online service. Naturally, the hardware architecture which characterizes said first computer system 100 can be of any type, and the present invention can be implemented over the broadest variety of computer platforms.
What matters is that said first computer system 100 and said second computer system 200 can exchange communication messages. In Figure 1, in fact, both the computer systems 100 and 200 are connected to a communications network, indicated by the number 400, and they are connected to each other by a connection (of any type), indicated by the number 401.
It has been stated that the service provided through said first computer system 100 can be absolutely generic, and generic can be the physical and architectural configuration of said first computer system 100. The only requirement (which is absolutely not binding) for the first computer system 100 is that it has an access subsystem 101, which supports a user interface capable of exhibiting a label which can be acquired from said terminal 510.
Even the technology to be used for such labels does not poses particular constraints, and any technology that allows to produce a label in an efficient way, which can be easily acquired with a user terminal, is certainly usable for the implementation of the present invention.
We have already said, regarding the commercial implementation of the "direct transaction service" supported by the computer system 200, that the labels constituted by a QR code are, at the moment, among the favorites implementations. However, the use of QR code (or even barcodes) is not the only possible alternative, because, as already mentioned, other solutions are possible: some of these are already mature, such as those offered by short-range radio technologies (e.g. NFC - Near Field Communication), whose integration in the future generation mobile terminals is already foreseen, or technologies not yet applicable on a commercial scale (e.g. technologies based on acquisition of physiognomic characteristics), or other technologies, provided they can allow efficient and flexible labeling, which is also easily acquired with a user terminal.
In Figure 1, such a label is indicated with the number 110; in the example drawn in the figure a QR code generated on the monitor of said interface 101 is shown. A QR code is a preferred implementation of said labels which are essential both for the operation of said known service provided by said computer system 200, and for the operation of the combined system according to the present invention.
Finally, with the numbers 511 and 512 indicate two arrows, which represent operations of particular importance for the operation of the combined system according to the present invention.
The operation 511 represents the acquisition of a label, exhibited by first computer system 100, by a user 500. In accordance with the teachings of the present invention, this acquisition must take place through the use of a specific custom application, installed on a terminal 510 belonging to said user 500, who must be registered to benefit from said "direct transaction service" supported by second first computer system 200.
The operation 512, on the other hand, represents the transmission of information, at least partially deduced from this newly acquired label, to said second computer system 200.
This acquisition process 511 and transmission process 512, are performed using the procedures and systems that are used to provide a known "direct transaction service", which is a distinct service independent from said generic service provided by said first computer system 100.
This acquisition process 511 and transmission process 512 are essential in the present invention, as well as the new computer programs necessary for its implementation. These new computer programs, developed on the basis of this essential process, have a relevant effect on the functioning of both the second computer system 200 (initially conceived for the sole support of said "direct transaction services"), and of said first computer system 100 designed to support a generic online service. In particular, thanks to these computer programs that modify the operation of said computer systems 100 and 200, said first computer system 100 will benefit from an identification mechanism with "strong" authentication that is particularly reliable and, at the same time, of excellent usability.
This acquisition process 511 and this transmission process 512 work particularly well both to implement the new association procedures and the new identification procedures.
The association procedures allow to couple the generic services supported by said first computer systems 100 with the "direct transaction services" supported by said second computer system 200. The identification procedures allow identification of a user of a generic service supported by one of said first computer systems 100, by means of the functionality of one of said second computer systems 200.

The new computer programs, therefore, modify the operation of computer systems 100 and 200 with respect to their operation according to the prior art. The following is a summary of how the new combined system reveals a new functional process aimed at supporting a new advantageous method of identification with "strong" authentication.

The two computer systems 100 and 200 are designed to be able to couple in order to improve the use of a generic service, supported by said first computer system 100, by a user 500 (registered to also benefit from a "direct transaction service" supported by said second computer system 200). And said coupling is characterized by comprising the functional steps shown below.
✔ Said user 500 can request to be configured so that its access to said generic service, supported by said first computer system 100, is based on an identification supported by said second computer system 200 (on which it is already registered to use a "direct transaction service" or, more generally, a second service, distinct and independent from the generic service supported by said first computer system 100).
✔ Said first computer system 100 reacts to this request by exhibiting a specific label that can be read by means of the specific personalized application for the use of the "direct transaction service", and the information deductible from said label are available, at least in part, also to said second computer system 200.
✔ Said user 500 acquires said label by means of said operation of acquisition 511.
✔ Said User 500 forwards at least some essential information obtained from said label to said second computer system 200 by means of said operation of transmission 512.
✔ Said second computer system 200,
   - from the analysis of said received label,
   - from the information which already are in its availability,
   - and by the fact that the user 500 who carried out the retransmission of the label is identifiable in a "strong" way, due to the authentication mechanisms which is typical of the "direct transaction service" for which said user 500 is previously registered, configures the profile associated with said user 500 so that, upon reception of successive labels originated by said first computer system 200, and retransmitted by said user 500, said second computer system 200 will transmit to said first computer system 100, by means of a telematic connection 401, at least one message containing at least the confirmation (or not) of the "strong" identification of said user 500.
✔ At the end of the execution of the functional steps summarized above, said first computer system 100 and said second computer system 200 share the information about the fact that, from now on, said user 500 can be identified at said first computer system 100 through a message coming from said second computer system 200, and said message follows the display of a label, on said first computer system 100, exhibited to said user 500.

After the two computer systems 100 and 200 have been coupled in relation to the use of a generic service, supported by said first computer system 200, for a user 500 (registered to also benefit from a direct transaction service supported by said second computer system 200), the two computer systems 100 and 200 are arranged so that the identification of said user 500 at said first computer system 100 is characterized by comprising the functional steps shown below.
✔ Said user 500 requests to be identified to access said generic service, supported by said first computer system 100.
✔ Said first computer system 100 reacts to this request by displaying a label that can be read by means of the specific personalized application for the use of the "direct transaction service", and the information deductible from said label are available, at least in part, also to said second computer system 200.
✔ Said user 500 acquires said label by means of said operation of acquisition 511.
✔ Said User 500 forwards at least some essential information obtained from said label to said second computer system 200 by means of said operation of transmission 512.
✔ Said second computer system 200,
   - from the analysis of said received label,
   - from the information which already are in its availability,
   - and by the fact that the user 500, who carried out the retransmission of the label, is identifiable in a "strong" way, due to the authentication mechanisms which is typical of the "direct transaction service" for which said user 500 is previously registered, transmits to said first computer system 100, through a telematic connection 401, at least one message containing at least the confirmation of the "strong" identification of said user 500.
✔ Said first computer system 100 grants the access to said generic service for said user 500, who had requested it.

In synthesis, the present invention combines two existing systems through an appropriate software update, which consists in the addition and development of two new essential macro-functionalities that have an impact on both systems:
✔ a first macro-functionality, which consists in the procedures for combining a generic service (supported by a first computer system) and a specific service (a "direct transaction service"), the latter chosen to act also as a "strong" authentication service for the identification of an operator;
✔ and a second macro-functionality, which consists in the identification procedures that are developed so that the two computer systems, which, as mentioned, are distinct in origin, but then combined, cooperate efficiently in order to "strongly" authenticate an operator who must be identified when accessing a generic service supported by the first computer system (which, therefore, may not have an own identification mechanism).

An important issue is that the additional processes, which characterize the new operation of the combined system, use in a very efficient way the identification mechanism already developed for the "direct transaction service" supported by the second computer system 200. This issue highlights how the new identification method according to the teachings of the present invention, although it uses and integrates known characteristics of two known information systems, produces an effect that is not limited to the sum of the effects that the single known characteristics produce in the known art. After all, however, this new operation of the combined system is supported by the development, which is necessary, of new computer programs to be installed in both systems involved.
In particular, the operation of the first computer system 100 takes advantage from a particular effect: that is, it can allow access to a user identified in a "strong" way without the need of managing an interface for acquiring a physical key. This result is not achieved by combining a subsystem of acquisition of physical keys, but it is achieved by exploiting the "strong" identification mechanism offered by the functionality of another service (the so called "direct transaction service"); functionalities which have been designed for other purposes, but modified according to the teachings of the present invention, for the implementation of the invention itself.

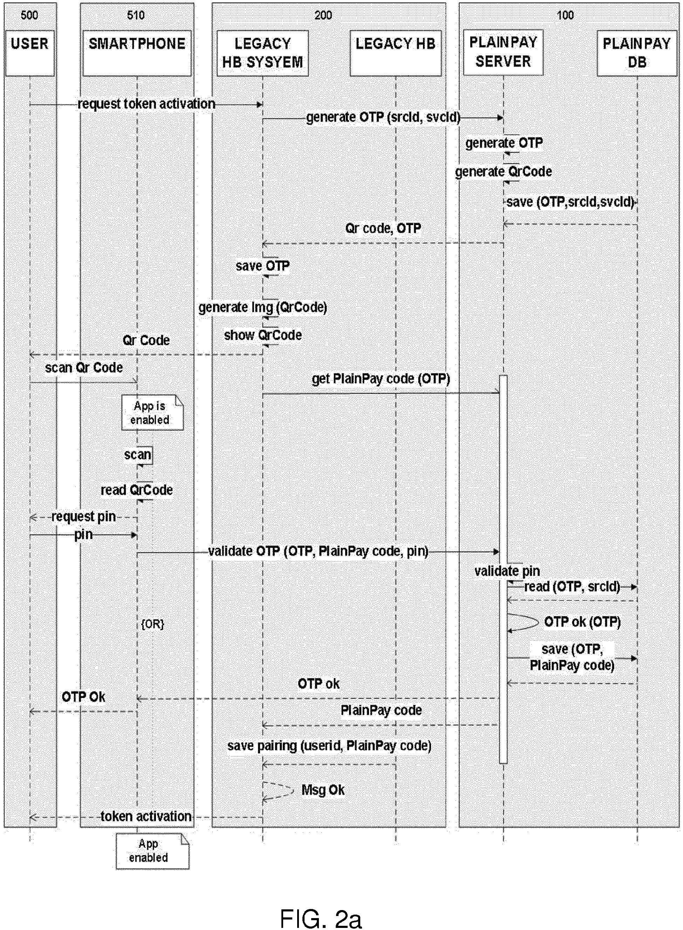

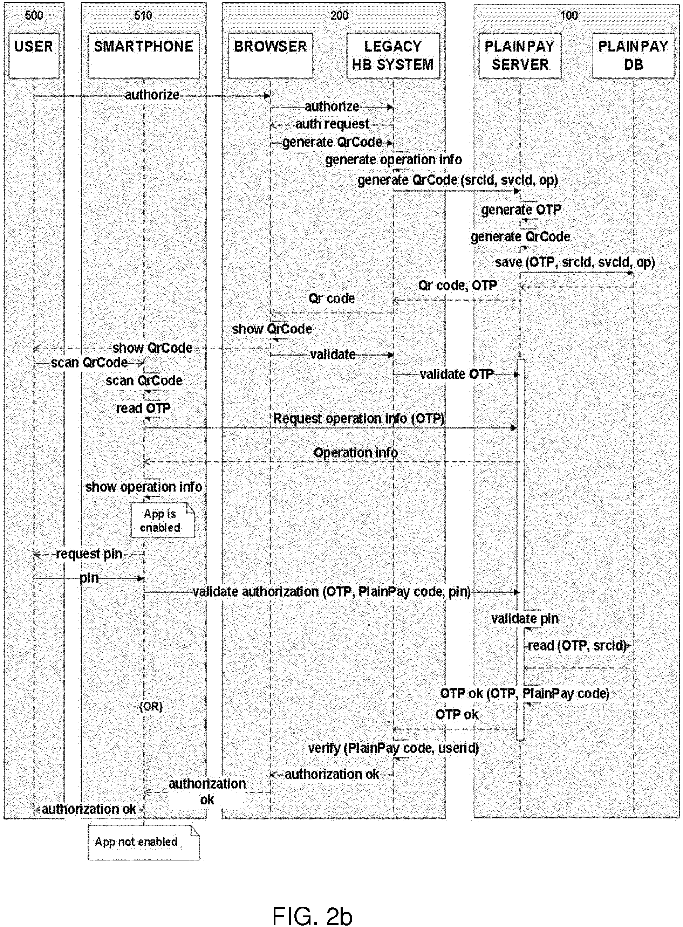

The general operation principles of the combined system can be practically implemented by defining various formal protocols, of which Figures 2a and 2b represent significant examples, as they constitute indeed real developments based on the teachings of the present invention and which will be soon proposed in the context of commercial offers.

Figure 2a shows, in the typical protocol writing formalism, an example of protocol for the implementation of the association process according to the teachings of the present invention; the expert in the field, in fact, will be able to read, in the exchange of the messages indicated in Figure 2a, the sequence of essential procedural steps so that there is a combination between a generic service supported by a first computer system 100 and a "direct transaction service" supported by a second computer system 200.
In Figure 2a, the represented entities exchanging the messages are: the user 500 and his own "smartphone" 510 (i.e. the personal terminal) and the two computer systems 100 and 200. Each of the two computer systems 100 and 200 is represented by a service unit (that is, a processing system or server) and an information storage unit (or data base).
Specifically, in the example of Figure 2a, the computer system 100, which supports a generic service, is defined in the labels as a *"Legacy"* system, indicating the fact that it is a generic system not necessarily designed according to the teachings of the present invention. This prerogative requires that the modifications necessary to integrate this "Legacy" system in the combined system, according to the invention, must be decouplable from the general operation of the "Legacy" system itself (i.e. the computer system 100), paying attention that the new functionalities interact with the "Legacy" functionalities in a few and well-specified modalities, so as to make the development of the programs necessary for the implementation of the present invention possible, easy and easily integrable.
The computer system 200, on the other hand, the one designed to support the so-called "direct transaction service" that incorporates the "strong" authentication mechanism to be extended to the generic service supported by the "Legacy" system (or computer system 100), is referred to, in the labeling used in Figure 2a, with the name "Plainpay". This indicates the fact that the invention can be implemented in the context of a service (precisely the "Plainpay" service) for which a commercial name already exists.
As a whole, Figure 2a, clearly shows how the two computer systems 100 and 200 (i.e. the "Legacy" system and the "Plainpay" system), thanks to the development of appropriate programs, operate in close cooperation, and can therefore be seen as a single combined system.

Figure 2b shows, in the typical protocol writing formalism, an example of protocol for the implementation of the identification process, according to the teachings of the present invention; the expert in the sector, in fact, will be able to read in the exchange of the messages indicated in Figure 2b the sequence of the essential procedural steps for the identification with "strong" authentication of a user 500 (indicated with the label "User") who accesses to a generic service supported by a first computer system 100. It will be noted that the identification physically takes place at the entity indicated by the label "PlainPay server", responsible for providing a "direct transaction service" according to the meaning used in the present description, which, in the terminology used in this description, corresponds to a server belonging to said second computer system 200, and said identification is used to authorize access to a different (generic) service provided in a different system.
Also Figure 2b (as Figure 2a), as a whole, clearly shows how the two computer systems 100 and 200 (i.e. the *"Legacy"* system and the *"Plainpay"* system), thanks to the development of appropriate programs, operate in close cooperation, and, therefore, they can be perceived as a single combined system.

At this point in the description it is worth to underline the fact that the association between a generic service and the so-called "direct transaction service" is a real configuration procedure that must be performed *una tantum.* Therefore, it does not necessarily have to be a process managed by the user, as well as it does not necessarily need to take place according to the methods indicated in the present invention.
In fact, it is essential just the result which is obtained by means of this association function: i.e. it must just happen that the access rights of said operator 500, to access to said first computer system 100, in order to benefit from said "generic service" which requires the user identification, are based on an authorization command coming from said second computer system 200 (i.e. the known system that supports the so-called "direct transaction service").

It is important to highlight that the expression *"generic service",* used to refer to the services supported by said first computer system 100, has to be understood in a literal way. In fact, these generic services can range over a very wide variety of applications that go from the so-called *"home banking"* services, operated by any internet access point, to the services provided at ATM (Automated Teller Machine) stations, such as cash withdrawals, to e-commerce services, up to include services outside the banking and payments world, such as services where it is necessary to access databases to modify the content, to add data, or simply to retrieve information.

When the generic services supported by said first computer system 100 are associated with a "direct transaction service", they can benefit from the interface 510; and the latter may be, in some respects, more convenient than the interface offered by the station 101 that the computer system 100 normally offers to its users (when they are not identified through said "direct transaction service"). In particular, all the of reporting and confirming functions, about the operations carried out by the operator 500 when he benefits from the generic service, can be reported directly on the personal terminal 510 of the operator 500 himself (e.g. the receipt of a withdrawal at an ATM).
Not only that, once the association has occurred, the man skilled in the art, who knows how the system 100 supports every generic service, will be able to make further changes to the interface functions of said generic service. Therefore, it will be able to generally adapt all the command interface of the generic service, so that this can be supported by the terminal 510, as an alternative to the interface offered by the station 101; significant improvements can thus be introduced also in the ease of use of the generic service.
Obviously, the more the functionality of the generic service supported by the first computer system 100 are integrated into elements of the second computer system 200 and in the personal terminal 510 (essential for the provision of the "direct transaction service" as well as for the identification process), the greater is the complexity of integration. This complexity of integration, on one hand resizes one of the advantages of the invention, which consists in the simplicity of development of the association functions but, on the other hand, it does not affect in any way the fundamental purpose of the invention, which consists in offering a general and unified method of identification with strong authentication, actually applicable for the secure provision of any generic service based on access to an IT platform.

The invention described above can also be implemented with numerous variants which can offer further advantages with respect to those previously mentioned. And such further variations may be made by the man skilled in the art without thereby departing from the invention as it results from the present description and from the appended claims. Furthermore, the invention itself can be carried out in a partial manner as well as many details described can be substituted by technically equivalent elements.
In particular, the technology used in the computer systems that compose the system object of the invention is not a characterizing part of the present invention and therefore, if in the future should be available more advantageous technologies than those indicated to support the preferred implementations, or if the current ones technologies will evolve towards better performance, more advanced miniaturization, or better quality-price ratios, other types of applications could be conceived, which could constitute new implementations of the present invention without modifying the inventive nature.
After all, the problem of the safe identification of a person does not arise only in the context of access to computer systems, but certainly has a value which is general and broad.
For this reason, the described invention lends itself to incorporate and support further expedients aimed at further improving the safe identification of an operator and integrating, in an ever more usable way, this procedure into a wider variety of services based on computer platforms, in turn possibly integrated into even more complex systems: these expedients, here not described, may be the subject of further patent applications associated with this invention.

## Claims

1. Method of identification with "strong" authentication applicable to enable an operator (500) to use a "generic service" supported by the said first computer system (100), and said method of identification with "strong" authentication is supported by a second computer system (200), in which said operator (500) is also registered to use a "second service" supported by the said second computer system (200); and said method is composed by two main phases in which:
a. a first phase of association consists in coupling said "generic service", provided to said operator (500), supported by the said first computer system (100), with said "second service" supported by the said second computer system (200), in such a manner that the rights of access to said "generic service" by said operator (500), are configured in such a way that the access is enabled to him, or not enabled, upon identification of said operator (500), and said access is granted by a command coming from said second computer system (200);
b. a second phase of identification consists in the procedure of identification with "strong" authentication of said operator (500), and it is executed a number of times, every time that said operator (500) requires to be enabled to use said "generic service" supported by the said first computer system (100);
and said second phase of identification, indicated in the preceding point "b.", comprises at least the following steps:
i. said operator (500) requires to access the said first computer system (100) to use said "generic service",
ii. said first computer system (100) displays a label (110), which identifies said request of access, to said operator (500);
iii. said operator (500) acquires said label (110) and transmits information extracted from said label (110) to said second computer system (200), according to the same procedure foreseen for the use of said "second service" for which he is registered,
iv. upon receipt of said information extracted from said label (110), said second computer system (200) has all the information necessary to identify said operator (500), and establishes whether said operator (500) is, or is not, enabled to access said "generic service" supported by said first computer system (100),
v. if said operator (500) is enabled to access said "generic service", said second computer system (200) transmits an authorization command to said first computer system (100), and the access request of said operator (500) is successful.

2. Method of identification with "strong" authentication according to the preceding claim, in which said first phase of authentication (indicated at point "a." of the preceding claim), comprises at least the following steps:
i. said operator (500), who have to access the said first computer system (100) to use said "generic service" upon identification, requires that his rights of access to said "generic service" are configured in such a way that the access is enabled to him, or not enabled, by at least a command coming from said second computer system (200),
ii. said first computer system (100) reply to this request, indicated in the preceding point "i.", by exhibiting to said operator (500) a label (110),
iii. said operator (500) acquires said label (110) and transmits information extracted from said label (110) to said second computer system (200), according to the same procedure foreseen for the use of said "direct transaction service" for which he is registered,
iv. upon receipt of said information extracted from said label (110), said second computer system (200) and said first computer system (100) have the common information about the fact that said operator (500) has configured its rights of access to said "generic service" in such a way that the access is enabled to him, or not enabled, by a command coming from said second computer system (200).

3. Method of identification with "strong" authentication according to claim 1 wherein said operator (500) acquires said label (110) by means of his personal radio terminal (510), which comprises a photo camera and an image recognition software.

4. Method of identification with "strong" authentication according to claim 1 wherein said operator (500) acquires said label (110) by means of his personal radio terminal (510), which comprises a receiver of short range radio signals

5. Method of identification with "strong" authentication according to claim 1 wherein said operator (500) transmits information extracted from said label (110) to said second computer system (200) by means of his personal radio terminal (510), which is connected to said second computer system (200) through a radio mobile cellular network.

## Amended claims

### Amended claims in accordance with Rule 137(2) EPC.

1. Method of identification with "strong authentication" applicable to enable an operator (500) to use a "generic service" supported by a "first computer system" (100), and said method of identification with "strong authentication" exploits the procedure of identification with "strong authentication" associated to a "second service", independently designed from said "generic service", which is delivered by a "second computer system" (200), and said operator (500) is also registered to use said "second service" supported by the said "second computer system" (200); and said method of identification is **characterized in that**
it includes a preliminary first phase of association, which consists in coupling said "generic service", provided to said operator (500), and supported by the said "first computer system" (1 "00), with said "second service" supported by the said "second computer system" (200), in such a manner that the rights of access to said "generic service" by said operator (500), are configured in such a way that the access is enabled to him upon identification of said operator (500) by means of said procedure of identification with "strong authentication" associated to said "second service", and said access is granted by a command coming from said "second computer system" (200).

2. Method of identification with "strong" authentication according to claim 1 in which said preliminary first phase of association is followed by a second phase of identification consisting in the procedure of identification with "strong authentication" of said operator (500), which is associated to the said "second service", and procedure of identification with "strong authentication" is executed every time that said operator (500) requires to be enabled to use said "generic service" supported by the "said first computer system" (100);
and said second phase of identification comprises at least the following staps:
i. said operator (500) requires to access the said "first computer system" (100) to use said "generic service",
ii. said first computer system (100) displays a label (110), which identifies said request of access, to said operator (500);
iii. said operator (500) acquires said label (110) and transmits information extracted from said label (110) to said "second computer system" (200), according to the same procedure foreseen for the use of said "second service" for which he is registered,
iv. upon receipt of said information extracted from said label (110), said "second computer system" (200) has all the information necessary to identify said operator (500), and establishes whether said operator (500) is, or is not, enabled to access said "generic service" supported by said "first computer system" (100),
v. if said operator (500) is enabled to access said "generic service", said second computer system (200) transmits an authorization command to said first computer system (100), and the access request of said operator (500) is successful.

3. Method of identification with "strong" authentication according to claim 1, in which said first preliminary phase of association (comprises at least the following steps:
i. said operator (500), who have to access the "said first computer system" (100) to use said "generic service" upon identification, requires to "said first computer system" (100) that his rights of access to said "generic service" are configured in such a way that the access is enabled to him by at least a command coming from said "second computer system" (200),
ii. said "first computer system" (100) reply to this request, indicated in the preceding point "i.", by exhibiting to said operator (500) a label (110),
iii. said operator (500) acquires said label (110) and transmits information extracted from said label (110) to said "second computer system" (200), according to the same procedure foreseen for the use of said "second service" for which he is registered,
iv. upon receipt of said information extracted from said label (110), said "second computer system" (200) and said "first computer system" (100) have the common information about the fact that said operator (500) has configured its rights of access to said "generic service" in such a way that the access is enabled to him by a command coming from said second computer system (200).

4. Method of identification with "strong authentication" according to claim 1 wherein said operator (500) acquires said label (110) by means of his personal radio terminal (510), which comprises a photo camera and an image recognition software.

5. Method of identification with "strong authentication" according to claim 1 wherein said operator (500) acquires said label (110) by means of his personal radio terminal (510), which comprises a receiver of short range radio signals

6. Method of identification with "strong authentication" according to claim 1 wherein said operator (500) transmits information extracted from said label (110) to said second computer system (200) by means of his personal radio terminal (510), which is connected to said second computer system (200) through a radio mobile cellular network.
